# EUROPEAN PATENT SPECIFICATION

(11) **EP 3 227 509 B1**
(45) Date of publication and mention of the grant of the patent: **06.10.2021**
(21) Application number: 15866348.4
(22) Date of filing: 17.11.2015
(51) Int. Cl.: E04F 15/18, E04F 15/12, B32B 5/02, B32B 15/08, B32B 27/32

(54) **GAS-BARRIER FOR FLOOR AND OTHER SURFACES AND A PROCESS TO PRODUCE THE SAME**
GASBARRIERE FÜR BÖDEN UND ANDERE OBERFLÄCHEN UND VERFAHREN ZUR HERSTELLUNG DAVON
BARRIÈRE DE GAZ POUR REVÊTEMENT DE SOL ET D'AUTRES SURFACES ET SON PROCÉDÉ DE PRODUCTION

(30) Priority: 01.12.2014 SE 1451460
(43) Date of publication of application: 11.10.2017
(73) Proprietor: Sto Scandinavia AB, 582 77 Linköping (SE)
(72) Inventor: SJÖBERG, Anders, SE-216 11 Limhamn (SE)
(74) Representative: Zacco Sweden AB
(86) International application number: PCT/SE2015/051235
(87) International publication number: WO 2016/089282

(56) References cited:
- WO-A1-03/047850
- WO-A1-03/047850
- CN-U- 202 299 323
- DE-A1- 3 113 888
- DE-U1- 9 309 871
- DE-U1- 29 806 041
- DE-U1- 29 806 041
- DE-U1-202014 002 908
- JP-A- 2010 095 962
- JP-A- 2010 095 962
- US-A- 5 137 764
- US-A- 5 137 764
- US-A- 5 595 625
- US-A- 5 595 625
- US-A1- 2004 159 073
- US-A1- 2005 031 832
- US-A1- 2006 260 235
- US-A1- 2008 113 141
- US-B1- 6 250 043
- US-B1- 6 250 043

## Description

The present invention is defined in the appended claims. Any disclosure lying outside the scope of said claims is only intended for illustrative, informative as well as comparative purposes. The invention concerns a gas barrier for floor or other intended surface by means of a cloth or foil that is gas-tight and a proceeding to produce a said gas barrier for floor or other intended surface by means of a cloth or foil that is gas-tight.

Release of chemical substances from materials is found, among other things, from floors in buildings having a so-called sick building syndrome (SBS). The substances may have been in the floor from the beginning, be a product of substances that have been present from the beginning, absorbed by the floor from glue damaged by damp and saponified or other material that has had contact with the floor or has been supplied to the floor in the form of wastage of liquids or in another way. Existing products having been intended to form jointless barriers for emissions, e.g. products of epoxy, have not turned out to be entirely/sufficiently tight. Their tightness only affords a slowing down effect, which often is not sufficient to remedy bad smell, the consequential problems of the emissions with SBS in buildings, or other problems.

Existing known systems to prevent emissions from floors may be summarized according to the following.

* The technically safest method is considered to be to arrange an air gap on top of the floor, which then is ventilated by air that is sucked through the gap and is discharged outside the house. All emissions emitted from the floor are caught by the air current in the ventilation gap and is brought out of the house. Usually, floor coverings are loose-laid, alternatively a layer of screed compound is laid on the ventilated floor and the floor covering is glued onto the same.

* The method that most resembles the present invention is also based on a metal foil, which has been protected by a layer of PE in a corresponding way. The product is called "DRY-TOP Metal sparrlaminat" and may be glued to the substratum as well as be covered using a screed compound.

The difference is that this foil lacks PP fibres on the surface and thereby has considerably impaired adhesion properties as well as is stiff, slippery, and fairly unpleasant to handle. Floor coverings are not applied directly to this cloth since the adhesion is too poor. Usually, a layer of screed compound is put on the cloth and the floor covering is glued onto the same. Alternatively, the floor coverings are loose-laid directly on the cloth, which then also often has been loose-laid.

* "Sealing coats" applicable by rolling. There are a number of different products that all have a row of common traits. All of the products come in a liquid state and are intended to be applied to concrete floors where they either are sucked in entirely or partly, or form a layer on the surface of the concrete. All products cure or dry so that they transform into a solid state, either at the surface or in the pore system. This type of sealing coat is not, as previously mentioned, sufficiently tight. In the best case, it affords a slowing down effect on the emissions, which in combination with the ventilation of the house and some other parameters may be perceived as a considerable improvement in the indoor environment. It is usually possible to agglutinate directly on the products that are sucked into the concrete. The layerforming products usually need to be levelled before the subsequent flooring. It is possible to loose-lay a flooring directly on top of all products.

* cTrap^{TM} is a cloth containing an absorbent for emissions. The cloth has a membrane that lets through water steam but simultaneously stops other chemical substances. These are intercepted and encapsulated by the absorbent.

On cTrap^{Tm}, only loose-laying is possible since the product is a "fluffy" cloth of a low strength.

Examples of patent documentation of technique according to the present are shown in the patent publications mentioned below:
DE 29806041 U1,
US 5137764 A,
US 2006/0260235 A1,
US 5595625 A,
US 2008/0113141 A1, and
US 6250043 B1.

Among the above-mentioned publications, there is no gas-tight aluminium foil, which has a protecting layer of chemical substrate on both sides thereof and which cures in the place of its mixing and application to the aluminium foil so that it adheres to the aluminium foil and forms a gas-tight homogeneous barrier.

Therefore, the main object of the present invention is primarily to solve, among other things, the above-mentioned problems to reliably prevent gases and other chemical compounds from being emitted from or absorbed by floor or other construction surface.

Said object is achieved on one hand by means of a gas barrier according to independent claim which is characterized in that, on the outside of said gas-tight foil, which is built up from a gas-tight aluminium foil and having protecting layers of polymers on the sides thereof, there is a covering arranged, and that said covering is formed of one or more components, which are mixed and cured in the place of the application thereof to said foil, and adheres to the same in place for the formation of a jointless gas-tight homogeneous barrier, that the main part of the surfaces of said homogeneous barrier are surface-enlarged by means of fibres having the ability to improve the adhesion and which has been fasten by being glued or pressed in place at elevated temperature with said protective layers consisting of polymers, that said foil having fastened protective layers thereon, and which is manufactured in factory, is arranged to be delivered in roll form, for free laying out on the floor, or some other intended surface, or to be glued thereon, and that several widths of the gas-tight fol are lad together edge to edge and/or overlapping each other at mutually meeting edges by agglutination and/or by aluminium tape along the joints.

Said object is in addition achieved by means of a proceeding according to independent claim 3, which is characterized in that, on an intended floor or other intended surface, a gas-tight foil in the form of a gas-tight aluminium foil is laid out loosely or is fastened by glue or other adhering adhesion agent to form a barrier and thereby prevent emissions, that on said gas-tight foil and protecting layers, there is applied a material in, e.g., a liquid state, which has the ability to cure and thereby, by drying, solidifying, etc., transforms into a solid state and thereby is integrated with said gas-tight aluminium foil and the protective layers for the formation of a continuous on-site made gas-tight, jointless barrier having low build height, that on the protecting layer on the respective side of the aluminium foil, surface-enlargement is effected by means of fibres, and that several widths of gas-tight aluminium foil are laid out and/or fastened on intended floor, and that formed joints are joined between the widths in pairs to each other using, e.g., gas-tight aluminium tape, before said curing, liquid, dryable, solidifiable, and jointless flooring is applied.

The invention is in particular intended to prevent release of chemical substances from floors.

The construction system provides a continuous and jointless barrier, which prevents release or absorption of gases and other chemical compounds, and may be integrated with the floor or other intended surface.

The system consists of liquid materials such as glue and coating as well as cloth or foil. The construction system is applied in different layers, which bind together with each other as well as may also be bound directly to wall, floor, ceiling, or on other construction surface.

What is unique with the invention is that a, e.g., liquid flooring is applied directly to the gas-tight barrier layer (the cloth). Thereby, there is provided a tailor-made, continuous, and jointless barrier which is tight against gas. The materials of the barrier have good internal adhesion and are held together as a homogeneous unit and may be laid out but also be glued in place to the subfloor.

The construction system consists of a tight cloth or foil which is laid loosely on the substratum or is fastened on the substratum using, for instance, glue or by the cloth being put in a liquid or sticky material, which fastens to the surface structure of the cloth and the substratum and then cures or solidifies, or is altered, so that the cloth is fastened to the substratum.

Normally, the foil/cloth is glued on the floor to get a solid and robust construction which is fixed and does not move. The cloth may also be laid loosely on the floor and that, on top of the cloth, the next layer is poured, which is got to engage the surface of the cloth and these layers dry or solidify together into a jointless and continuous layer which is lying loosely on the floor.

The cloth or the foil is built up from a gas-tight foil, *viz.* a gas-tight aluminium foil, which has been covered on both sides with a protecting layer of polymers or other chemical substrate.

The protecting layers of the cloth may, for instance, consist of the organic polymer Polyethylene (PE), which may be glued onto the aluminium foil or be fastened without glue by, for instance, being heated in place or fastened in some other way.

The surfaces of the cloth, of the above-mentioned protecting layers, are surface-enlarged by fibre that, among other things, has the purpose of improving the adhesion properties.

The current foil has a polypropylene fibre (PP) fastened on the surface. The fibre has been pressed in place at elevated temperature in the above-mentioned protective layer of PP, entirely without glue.

On the cloth, a material is applied in a liquid state, which fastens to the surface of the cloth and cures, dries, solidifies, or transforms in another way into a solid state so that said material forms a jointless and continuous layer together with the cloth.

A unique design may involve that, on top of the cloth, a liquid flooring is "spread out", which cures in place onto the substratum. Examples of a suitable flooring is the product StoCrete BB 100^{TM}, which gives a 2-3 mm thick covering having the corresponding properties as a PVC carpet. The floor covering StoCrete BB 100^{TM} is delivered to the working site as one, two, or more viscous liquids. Said components, which where appropriate are mixed together, are then spread out in an approx. 2-3 mm thick layer, which engages the fibres of the cloth and cure together with the same. StoCrete BB 100^{TM} is no unique product in itself.

What is unique with the method is, as previously mentioned, that a liquid flooring is now applied directly to the tight barrier layer (the cloth) and on-site provides a tailor-made, continuous, and jointless barrier that is tight against gas and which is held together as a homogeneous unit.

If in addition the cloth is glued to the floor before the covering is spread out, a robust and entirely gas-tight floor system is obtained having a low build height (approx. 3 mm) and good hygienic properties such as sound reduction, resilience/softness, cleanability, and colour stability, etc.

Several widths of the cloth may, if larger surfaces are required, be joined by being laid with an overlap, which is carried out with or without agglutination, by laying the widths edge to edge carried out with or without agglutination, or patching up the joint with tape.

The tightness of the joint, when the widths of the cloth are laid edge to edge and the joint is patched up with tape using an entirely gas-tight aluminium tape, which is a commodity from 3M^{TM}, will be satisfactory. Said surface-enlarging material may, in addition to being arranged continuously on said gas-tight foil, terminate a bit from the edge so that said joining only occurs with portions of non-surface-enlarged foil.

The method may also be executed by laying a screed compound on the cloth instead of spreading the floor covering. Then a support is obtained that is suitable to many different types of floor coverings. The method gains on this by increased options of floor coverings but loses by greater build height, increased complexity, and smaller development height in relation to the method below.

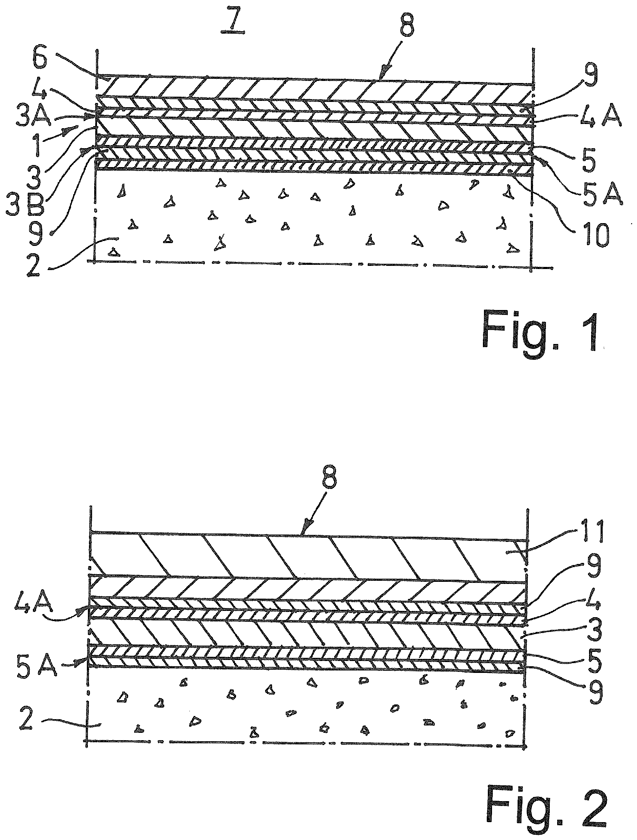

The invention is described in the following as a number of preferred embodiment examples, reference being made to the accompanying drawings, in which
Fig. 1 shows a first embodiment example of the invention illustrated in the form of a section view of a floor and provided gas barrier,
Fig. 2 shows a second embodiment example of the invention, likewise shown in the form of a section view, and

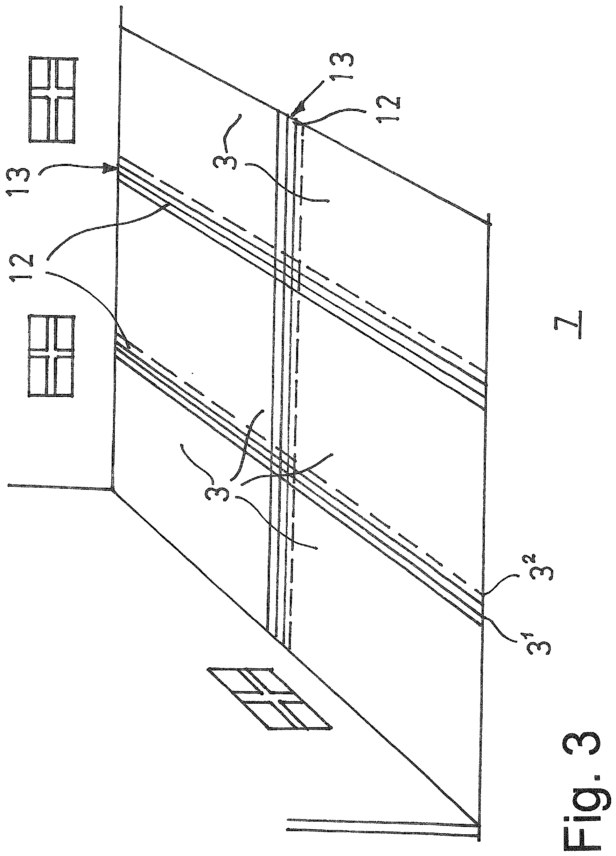

Fig. 3 shows a schematic planar view of a floor having several laid out widths of foil.

According to the invention, an intended gas barrier 1 for floor 2 or other intended surface by means of a cloth or foil 3 that is gas-tight is characterized in that, on the outside of said gas-tight cloth or foil 3, which is built up from aluminium foil having protecting layers 4, 5 of polymers on the sides 3A, 3B thereof, e.g., polyethylene (PE), which has been heated in place onto the aluminium foil, there is arranged a flowable covering 6. Said covering 6 is formed of one, pair-wise or more liquids, which cure in the place 7 for the application thereof to said cloth or foil 3, and adheres to the same in place for the formation of a jointless, gas-tight, homogeneous barrier 8. The covering may consist of;
* A single component just like a thick paint that dries and becomes hard.
* Two components where one of them is a powder and the other a liquid.
* Two liquids.
* More than two components, which may be both liquids and powders or other form (gas-ice-granulate, etc.).

Furthermore, the surfaces 4A, 5A of said protecting layers 4, 5 are in their entirety or partly arranged surface-enlarged by means of fibre 9 having the ability to, among other things, improve the adhesion, e.g. polypropylene fibre (PP) which has been fastened by, e.g., being glued or pressed in place at elevated temperature with said protective layers 4, 5, consisting of, e.g., polyethylene (PE). Said surface-enlarging material 9 also makes the cloth or the foil 3 more handleable, which is a major advantage upon the laying out. The edges of the cloth where the tape should be fastened tightly do not need to be covered with surface-enlarging material 9. The gas-tight cloth or foil 3 is freely laid-out on the floor, or some other intended surface, or is glued thereon by means of a suitable glue 10 or other sticky substance, and a screed compound 11 may be applied on the gas-tight cloth or foil 3. Several widths of gas-tight cloths or foils 3 are laid together edge to edge and/or overlapping each other at mutually meeting edges 3¹, 3² by agglutination and/or by aluminium tape, or other preferably gas-tight tape 12 along the joints 13.

When the surface is in the form of a floor 2, a barrier 8 is freely laid-out or fastened on the floor 2 and which has gas-tighting ability and which prevents release or absorption of gases and other chemical compounds from or to said floor 2. Said barrier 8 is formed of a gas-tight aluminium foil 3 having a cladding of a protecting layer 3A, 3B of polymers or other chemical substrate, e.g. polyethylene (PE). On said aluminium foil 3, polypropylene fibre (PP) or other protecting layer is fastened, e.g. pressed in place, and on top of the aluminium foil 3, a liquid curing covering, e.g. correspondingly similar to a PVC carpet, is applied.

A proceeding to produce a gas barrier for floor 2 or other intended surface by means of a cloth or foil 3 that is gas-tight comprises that, on an intended floor 2 or other intended surface, a gas-tight cloth or foil in the form of a gas-tight aluminium foil 3 is laid out or fastened by glue 10 or other adhering adhesion agent to form a barrier 8 and thereby prevent emissions. On said gas-tight aluminium foil 3, a material 6 is applied in a liquid state, which has the ability to cure and thereby dry, solidify, etc., and transform into a solid state and thereby be integrated with said gas-tight aluminium foil 3 for the formation of a continuous on-site made gas-tight, jointless barrier 8 having low build height.

On the gas-tight aluminium foil 3 and the floor covering 6 applied thereon, a screed compound 11 may be laid out for the formation of a support suitable for flooring.

It is possible to lay out and/or fasten several widths of gas-tight aluminium foil 3 on intended floor 2 and formed joints are joined between the widths in pairs to each other by preferably gas-tight, e.g. aluminium, tape 13, before said curing, liquid, dryable, solidifiable, and jointless flooring 6 is applied. On the surfaces 3A, 3B facing away from each other of said aluminium foil 3, a cladding 4, 5 in the form of a protecting layer of polymers or other chemical substrate is applied on the aluminium foil 3 before laying out on an intended floor 2.

Function and nature of the invention should have been clearly understood from the above-mentioned and also with knowledge of what is shown in the drawings but the invention is naturally not limited to the embodiments described above and shown in the accompanying drawings. Modifications are feasible, particularly as for the nature of the different parts, or by using an equivalent technique, without departing from the protection area of the invention, such as it is defined in the claims.

The cloth today consists of five different layers. In the middle, there is a gas-tight foil of aluminium, on each side of the foil there is a protecting layer (PE layer), and on each side of said protecting layer, there is a surface-enlarging material (PP fibre)

The foil consists of aluminium, and it should be entirely tight, other metal, or other material that is gas-tight.

The tape does not have to be of aluminium. It is possible to arrange the function of the joint also by means of a non-gas-tight tape.

In the text, aluminium foil is given as example and preferred embodiment example, respectively, but other metal material having the similar properties is accordingly equally feasible.

## Claims

1. Gas barrier (1) for floors (2) or other intended surface by means of a foil (3) that is gas-tight, **characterized in**
**that** on the outside of said gas-tight foil (3), which is built up from a gas-tight aluminium foil and having protecting layers (4, 5) of polymers on the sides (3A, 3B) thereof, there is arranged a covering (6), and that said covering (6) is formed of one or more components, which are mixed and cured in
the place (7) for the application thereof to said foil (3), and adheres to the same in place for the formation of a jointless, gas-tight, homogeneous barrier (8), that the main part of the surfaces of said homogeneous barrier (8) are surface-enlarged by means of fibres (9) having the ability to improve the adhesion and which has been fasten by being glued or pressed in place at elevated temperature with said protective layers (4, 5) consisting of polymers, that said foil (3) having fastened protective layers (4, 5) thereon, and which is manufactured in factory, is arranged to be delivered in roll form, for free laying out on the floor (2), or some other intended surface, or to be glued thereon, and that several widths of the gas-tight foil (3) are laid together edge to edge and/or overlapping each other at mutually meeting edges (31, 32) by agglutination and/or by aluminium tape (12) along the joints (13).

2. Gas barrier according to claim 1, wherein a screed compound (11) is applied on the gas-tight foil (3).

3. Proceeding to produce a gas barrier for floor (2) or other intended surface by means of a foil (3) that is gas-tight according to any one of claims 1-2, **characterized in that**, on an intended floor (2) or other intended surface, a gas-tight foil (3) in the form of a gas-tight aluminium foil is laid out loosely or is fastened by glue (10) or other adhering adhesion agent to form a barrier (8) and thereby prevent emissions, that on said gas-tight foil (3) and protecting layers (4, 5), there is applied a material (6) in, e.g., a liquid state, which has the ability to cure and thereby, by drying, solidifying, etc., transforms into a solid state and thereby is integrated with said gas-tight aluminium foil (3) and the protective layers (4, 5) for the formation of a continuous on-site made gas-tight, jointless barrier (8) having low build height, that, on the protecting layer (4, 5) on the respective side of the aluminium foil (3), surface-enlargement is effected by means of fibres (9), and that several widths of gas-tight aluminium foil (3) are laid out and/or fastened on intended floor (2), and that formed joints are joined between the widths in pairs to each other using, e.g., gas-tight aluminium tape (13), before said curing, liquid, dryable, solidifiable, and jointless flooring (6) is applied.

## Patentansprüche

1. Gasbarriere (1) für Böden (2) oder irgendeine andere dafür vorgesehene Oberfläche mittels einer Folie (3), die gasdicht ist,
**dadurch gekennzeichnet,**
**dass** an der Außenseite der gasdichten Folie (3), die aus einem gasdichten Aluminiumfolie aufgebaut ist und Schutzschichten (4, 5) aus Polymeren an den Seiten (3A, 3B) davon aufweist, eine Abdeckung (6) angeordnet ist, und dass die Abdeckung (6) aus einer oder mehreren Komponenten gebildet ist, die gemischt und an dem Ort (7) des Auftragens davon auf die Folie (3) ausgehärtet sind, und an dem Ort der Bildung einer fugenlosen, gasdichten, homogenen Barriere (8) an dieser haftet, dass der Hauptteil der Oberflächen der homogenen Barriere (8) mittels Fasern (9) vergrößert ist, die dazu im Stande sind, die Haftung zu verbessern, und der durch Kleben oder Einpressen bei erhöhten Temperaturen mit den aus Polymeren bestehenden Schutzschichten (4, 5) befestigt worden ist, dass die Folie (3), die darauf befestigte Schutzschichten (4, 5) aufweist, und die werkseitig hergestellt ist, zur Lieferung in Rollenform ausgelegt ist, um auf den Boden (2) oder auf irgendeine andere dafür vorgesehene Oberfläche verlegt zu werden, oder um darauf geklebt zu werden, und dass mehrere Breiten der gasdichten Folie (3) Kante zu Kante zusammengelegt sind und/oder an gegenseitigen Berührungskanten (31, 32) durch Verklebung und/oder durch Aluminiumband (12) entlang der Fugen (13) einander überlappen.

2. Gasbarriere nach Anspruch 1, wobei ein Strichverbund (11) auf die gasdichte Folie (3) aufgetragen ist.

3. Verfahren zur Herstellung einer Gasbarriere für einen Boden (2) oder irgendeine andere dafür vorgesehene Oberfläche mittels einer Folie (3), die nach einem der Ansprüche 1-2 gasdicht ist, **dadurch gekennzeichnet, dass,** auf einen dafür vorgesehenen Boden (2) oder irgendeine dafür vorgesehene Oberfläche, eine gasdichte Folie (3) in Form einer gasdichten Aluminiumfolie lose verlegt wird oder durch Klebstoff (10) oder ein anderes anhaftendes Klebmittel zur Bildung einer Barriere (8) und dadurch zur Vermeidung von Emissionen befestigt wird, dass auf die gasdichte Folie (3) und Schutzschichten (4, 5) ein Material (6) in beispielsweise einem flüssigen Zustand aufgetragen wird, das dazu fähig ist, auszuhärten und sich dadurch durch Trocknen, Verfestigung usw. in einen festen Zustand zu verwandeln und dadurch in der gasdichten Aluminiumfolie (3) und den Schutzschichten (4, 5) eingebettet wird, um eine kontinuierliche vor Ort hergestellte gasdichte, fugenlose Barriere (8) zu bilden, die eine niedrige Bauhöhe aufweist, dass, an der Schutzschicht (4, 5) an der jeweiligen Seite der Aluminiumfolie (3), die Oberflächenvergrößerung mittels Fasern (9) durchgeführt wird, und dass mehrere Breiten gasdichter Aluminiumfolie (3) verlegt werden und/oder an einem dafür vorgesehenen Boden (2) befestigt werden, und dass gebildete Fugen unter Verwendung von z.B. Aluminiumband (13), zwischen den Breiten in Paaren aneinander verbunden werden, bevor der aushärtende, flüssige, trockenbare, verfestigbare und fugenlose Bodenbelag (6) aufgetragen wird.

## Revendications

1. Barrière aux gaz (1) pour sol (2) ou une autre surface prévue au moyen d'une feuille (3) qui est étanche aux gaz,
**caractérisée en**
**ce qu'**à l'extérieur de ladite feuille (3) étanche aux gaz qui est constituée d'une feuille d'aluminium étanche aux gaz et ayant des couches protectrices (4, 5) de polymères sur ses côtés (3A, 3B), se trouve un revêtement (6), et **en ce que** ledit revêtement (6) est formé d'un ou de plusieurs composants qui sont mélangés et durcis en place (7) pour leur application sur ladite feuille (3), et adhère à celle-ci en place pour la formation d'une barrière homogène, étanche aux gaz et sans joint (8), **en ce que** la majeure partie des surfaces de ladite barrière homogène (8) est agrandie en surface au moyen de fibres (9) ayant la capacité d'améliorer l'adhérence et qui a été fixée par collage ou pressage en place à température élevée avec lesdites couches protectrices (4, 5) constituées de polymères, **en ce que** ladite feuille (3) sur laquelle sont fixées des couches protectrices (4, 5) et qui est fabriquée en usine, est conçue pour être livrée sous forme de rouleau, à poser librement sur le sol (2), ou toute autre surface prévue, ou à coller dessus, et **en ce que** plusieurs largeurs de la feuille (3) étanche aux gaz sont posées ensemble bord à bord et / ou se chevauchent au niveau des bords se rejoignant (31, 32 ) par agglutination et / ou par ruban aluminium (12) le long des joints (13) .

2. Barrière aux gaz selon la revendication 1, dans laquelle un composé de dresseur (11) est appliqué sur la feuille étanche aux gaz (3).

3. Procédé pour produire une barrière aux gaz pour sol (2) ou une autre surface prévue au moyen d'une feuille (3) qui est étanche aux gaz selon l'une quelconque des revendications 1 à 2, **caractérisé en ce que** sur un sol prévu (2) ou toute autre surface prévue, une feuille (3) étanche aux gaz sous la forme d'une feuille d'aluminium étanche aux gaz est posée de manière lâche ou est fixée par une colle (10) ou un autre agent d'adhérence adhérent pour former une barrière (8) et empêcher ainsi les émissions, **en ce que** sur ladite feuille étanche aux gaz (3) et sur les couches protectrices (4, 5), un matériau (6) est appliqué, par exemple, à l'état liquide, qui a la capacité de durcir et ainsi, par séchage, de se solidifier, etc., se transforme en un état solide et est ainsi intégré à ladite feuille d'aluminium étanche aux gaz (3) et aux couches protectrices (4, 5) pour la formation d'une barrière continue et étanche aux gaz, fabriquée sur place et sans joint (8) ayant une faible hauteur de construction, **en ce que**, sur la couche protectrice (4, 5) sur le côté respectif de la feuille d'aluminium (3), l'agrandissement en surface est effectué au moyen de fibres (9), et **en ce que** plusieurs largeurs de feuille d'aluminium étanche aux gaz (3) sont disposées et / ou fixées sur le sol prévu (2), et **en ce que** des joints formés sont joints entre les largeurs par paires l'un à l'autre à l'aide, par exemple, d'une bande d'aluminium étanche aux gaz (13), avant l'application dudit revêtement de sol sans joint, solidifiable, séchable, liquide et durcissant (6).
